# EUROPEAN PATENT APPLICATION

(11) **EP 0 677 845 A2**
(43) Date of publication of application: **18.10.1995**
(21) Application number: 95105428.7
(22) Date of filing: 11.04.1995
(51) Int. Cl.: G11B 23/02, G11B 33/04, G11B 23/40, G11B 23/04, G11B 23/107

(54) **Data storage element and system**

(30) Priority: 13.04.1994 US 227134
(71) Applicant: MINNESOTA MINING AND MANUFACTURING COMPANY, St. Paul, Minnesota 55133-3427 (US); International Business Machines Corporation, Armonk, N.Y. 10504 (US)
(72) Inventor: Benton, Kenneth E., c/o International Business, Armonk, New York 10504 (US); Johnson, Michael W., c/o Minnesota Mining and, Saint Paul, Minnesota 55133-3427 (US); Reid, Thomas W., c/o International Business, Armonk, New York 10504 (US); Sendelweck, Michael L., c/o International Business, Armonk, New York 10504 (US); Van Senden, Maxey P., c/o International Business, Armonk, New York 10504 (US)
(74) Representative: Hilleringmann, Jochen, Dipl.-Ing.

(57) **Abstract**

A data storage element and system uses a standard form factor housing with a variety of possible media contents. At least one coding identifier is provided at the rear of the housing which readily allows identification of the nature of the media inside the data storage element. Preferably, this takes the form of a colored insert block with openings detectable by suitable sensors, so that a human can easily identify the nature of the data storage element from the color of the insert block and a machine can do the same by detecting the presence or absence of the openings. Such insert blocks preferably are provided both on the front and rear of the data storage element, so that the drive for the element can detect the information at the front of the element, while a human or robot handling the element can detect the information at the rear of the element without having to remove it from a storage rack or insert it in a drive.

## Description

### Background of the Invention

### Field of the Invention

The invention relates to data storage elements and systems, and, in particular, to data storage elements for large data storage systems, where each data storage element has substantially uniform exterior dimensions, but may contain media of differing types or configuration.

### Description of the Related Art

In data storage systems, large numbers of data storage elements (tape cartridges, disks or the like) are stored in racks. Typically, the data storage elements are stored in the racks with their rear sides exposed for retrieval and their front sides protected by the rack structure. Since the media access hole is normally on or towards the front of the data storage element, this minimizes exposure of the media to dust. When the data on a given data storage element is called by a user, the data storage element is removed from the rack (either by hand or by a robot) and loaded into a drive.

Older data storage systems typically used only one type of data storage element and one type of data storage drive, minimizing the complexity of the system. However, since mid-size and large data storage systems may include thousands of data storage elements, this means switching to a new media type or capacity becomes a very expensive proposition. Not only do the drives need to be upgraded to handle the new media, but so do all of the data storage elements.

A demand therefore has developed for data storage systems which can handle a variety of data storage elements which differ from one another in the characteristics of the media in them, or in how the media is written. At the same time, for mechanical, automation, storage and logistical reasons, it still is desirable for such data storage elements to have substantially identical external physical dimensions. For example, two tape cartridges might have substantially the same industry standard physical dimensions (or "form factor"), while the media in them may have completely different magnetic properties or may have information encoded on it quite differently. This in turn means that the newer systems need some way to identify the type or character of the media in these otherwise nearly identical data storage elements, so that they can read from or write to the media properly.

One technique for doing this is taught in U.S. Patent 5,239,437 (Hoge et al.), which is incorporated herein by reference. In that system, holes, notches or the like are provided at the front of the data storage element which are indicative of the nature or characteristics of the media in the data storage element. Sensors in the drive detect the presence or absence of those holes or notches to detect the nature of the media. Hoge et al. go on to note that color coding is easier for a human operator to identify than a pattern of holes or notches and therefore also suggest color coding the media identifiers.

Hoge et al. suggest forming the notches or holes in a color coded insert which fits into a suitable opening formed in the main body of the data storage element. lncluding the notches on an insert improves manufacturability, since the rest of the data storage element body can be identical from one product to the next, regardless of the media contents. lt also is easier to mold the inserts from differently colored materials if they are formed as separate pieces from the main body.

### Summary of the invention

The present invention recognizes that a drawback to the Hoge et al. identification system is the location of the identifiers at the front of the data storage element. An automated loading system using Hoge et al.'s identification system must remove the data storage element from the rack and place it in a drive before being able to determine the nature of the media. A large complex data storage system may have several different types of drives. If the initial drive is incapable of reading or writing to that type of media, the system must remove the data storage element from the drive, and place it in an appropriate drive for that type of media. In addition to taking more time, this creates the risk of the data storage element being damaged by the initial drive before the system determines that it is an inappropriate type of drive.

This is less of a problem with a human handler, who can look at the color coding of the insert before loading the data storage element in a drive. However, even a human handler cannot determine the appropriate drive for the tape without removing it from the rack. That makes conducting an inventory of a large data storage element library difficult.

It is the object of the invention to make identification of the recording media much easier from outside of the data storage element housing.

The data storage element and system according to the invention uses a standard form factor housing with a variety of possible media contents. At least one coding identifier is provided at the rear of the housing which readily allows identification of the nature of the media inside the data storage element. Preferably, this takes the form of a colored insert block with openings detectable by suitable sensors, so that a human can easily identify the nature of the data storage element from the color of the insert block and a machine can do the same by detecting the presence or absence of the openings. Such insert blocks preferably are provided both on the front and rear of the data storage element, so that the drive for the element can detect the information at the front of the element, while a human or robot handling the element can detect the information at the rear of the element without having to remove it from a storage rack or insert it in a drive.

The present invention positions identifiers (holes, notches, color coded inserts and the like) at locations other than or in addition to the front of the data storage element. Preferably, such identifiers are included both at the front and the rear of the data storage element.

Such a structure has the advantage that the identifiers at the front of the data storage element can still be used in the fashion suggested by Hoge et al., while the identifiers at the rear of the data storage element can be used by a human or robot handler to determine the nature of the media in the data storage element even while the data storage element is still in the storage rack.

For a robot handler to use the identifiers at the rear of the data storage element in this fashion requires inclusion of suitable sensors on the robot handler to detect the identifiers, which is a further aspect to the present invention.

A data storage system constructed according to the present invention would have in it a variety of data storage elements and might have a variety of drives for them. When a given element is retrieved, the human or robot handle can immediately detect from the identifiers on the rear of the data storage element what type of drive is appropriate for the media in that element, and insert the element in such a drive. The built-in risk in an older system of inserting the data storage element into an incorrect drive is eliminated.

Even a relatively small number of notches or holes can code for a fairly large number of media configurations. For example, the presence or absence of just four notches can code for sixteen media configurations. The result is that the present invention allows for a system having a large variety of media and drive types, even though all of the data storage elements used in the system have substantially identical form factors.

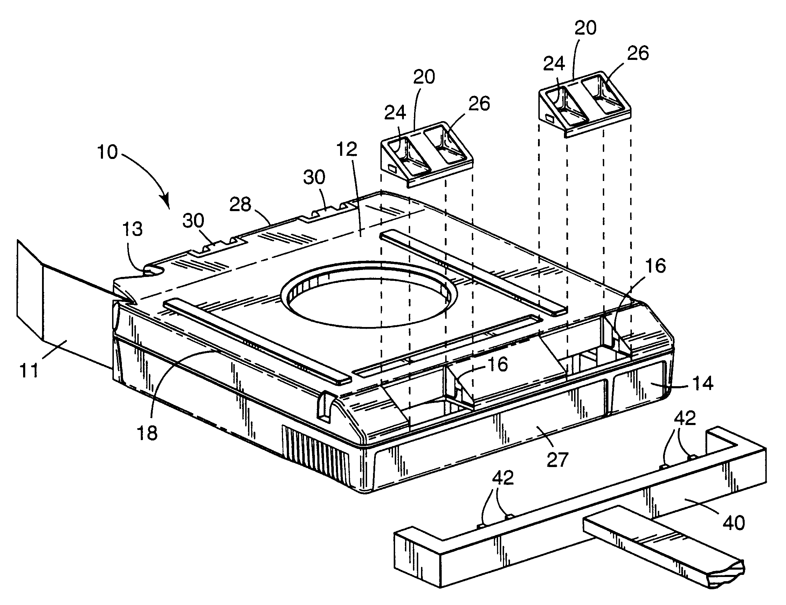

### Brief Description of the Drawing

The single drawing is a partially exploded view illustrating a data storage element and robotic sensor according to the present invention.

### Detailed Description of the Preferred Embodiments

The figure illustrates a data storage element according to the present invention configured as a 3480-type tape cartridge, since such cartridges are the type most commonly used in large data storage systems. The data storage elements employing the present invention are not limited to such tape cartridges, and could be any type of suitable tape, disk or the like.

A cartridge 10 is shown in the figure upside down and backwards, that is, the bottom 12 of the cartridge is shown on top in the drawing, while the rear 14 is shown nearest the viewer. Media 11 is contained in the cartridge 10, and is accessible from the outside of the cartridge 10 by a drive (not shown) through the media access hole 13.

The media 11 can vary tremendously. For example, it can vary in its fundamental principal of operation (magnetic or optical), its data recording format (longitudinal or helical), its tape dimensions (thick, thin, and the length of tape on the reel), or the composition or type of coating used on the tape (iron-oxide, chromium dioxide, barium ferrite, metal particulate, metal-evaporated). Depending upon the variations, completely different drives might be needed to read or write to the media (magnetic or optical). At the very least, a given drive might have to write differently depending upon the nature of the media (different coatings).

Identifiers according to the present invention are provided on the rear 14 of the cartridge 10 to indicate the nature of the media 11 contained in the cartridge 10. Specifically, the cartridge 10 has two recesses 16 of predefined dimensions formed in the rear of the housing 18. Two preformed or molded insert blocks 20 with identification coding formed therein are securable in the recesses 18.

In the embodiment shown in the drawing, each insert block 20 has a left opening 24 and a right opening 26 formed therein. Identification coding is provided by either including a given left or right opening 24,26, or not including it. In other words, the presence or absence of an opening acts as a binary code. As will be apparent, the inserts could have any number of openings, depending on their size and the fineness of the sensing apparatus.

In the embodiment shown the two inserts 20 provide up to four openings 24,26, providing a possible sixteen combinations of codings. Since one of these combinations (the one with no openings 24,26 in either insert block 20) will provide the same smooth exterior surface as an older cartridge of the same form factor, that code preferably should be used to code for the old type of data media.

In addition to having the openings, the insert blocks preferably are formed of or coated with different colors to indicate the nature of the media, since people generally find it easier to distinguish colors than binary coded openings. For insert blocks with two openings each, strictly speaking only four colors are needed, corresponding to the four possible states for each insert block. However, with only four colors a human handler must be sure the tape is oriented properly to determine whether, for example, the left insert block is green, and the right blue, or the other way around. To avoid this orientation problem, it may be preferable to use sixteen colors or hues. A human handler then need only know that dark green insert blocks indicate the tape needs to go in one type of drive, while tapes with lime green insert blocks need to go in another, and need not worry about the orientation of the tape.

It is common for a 3480-type cartridge to have a label 27 identifying the cartridge 10 or the data contents of the cartridge 10. The recesses 18 and insert blocks 20 therefore preferably are positioned in the lower portion of the rear of the cartridge 10 to avoid interference with the label 27.

Preferably, identifiers are included at both the front 28 and rear 14 of the cartridge 10. Placing them in both locations makes the information available both to human and robot handlers, and to the drive. The identifiers 30 at the front 28 can be identical to the insert blocks 20 at the rear 14 of the cartridge 10 (as shown in the drawing), or they can be different, depending on the desired configuration of the drive.

According to a further aspect of the invention, a robot loading arm 40 of a data storage system is provided to grasp and move the cartridge 14. The robot arm 40 is provided with sensors 42 for detecting the presence or absence of the identifiers on the cartridge 10. With notches 24,26 in the inserts 20 as shown in the drawing, the sensors 42 can be simple on-off pin switches. Alternatively, the sensors could be photo-detectors or the like. In any case, the signals from the sensors 42 can be provided to the control system for the data storage system to indicate the nature of the media in the cartridge 10 to the system.

Various changes and modifications to the embodiments of the invention as described will be readily apparent to one of ordinary skill in the art. For example, identifiers could be positioned on the sides instead of the rear of the data storage element, if that is where a robot grasps the data storage element. More or fewer recesses and identifiers could be provided, depending upon the number of different media characteristics to be coded. Similarly, the data storage element itself could be any of a variety of items, including, for example, other types of tape cartridges, floppy disks, floptical disks, optical disks, removable hard disks or the like. The present invention therefore is intended to be limited only by the following claims.

## Claims

1. Data storage element comprising:
- a housing having a front side and other sides with a media access opening formed on or near the front side to provide access to the inside of the housing,
- media of a certain nature contained in the housing and accessible from the outside of the housing through the media access opening, and
- a first identifier on one of the other sides of the housing having identifying coding thereon indicating the nature of the media.

2. Data storage element according to claim 1, characterized in that the housing has a first recess with predefined dimensions formed in one of the other sides of the housing and the first identifier comprises a first insert block secured in the recess.

3. Data storage element according to claim 2, characterized in that the coding means comprises a plurality of openings formed in the first insert block.

4. Data storage element according to claim 2 or 3, characterized in that the coding means further comprises the color of the first insert block.

5. Data storage element according to claim 2 or 3, characterized in that an outer surface of the first insert block substantially aligns with the side of the housing in which the first recess is formed, and the plurality of openings are in the outer surface of the first insert block.

6. Data storage element according to any one of claims 1 to 5, characterized by an additional identifier on the front side of the housing.

7. Data storage element according to claim 6, characterized in that the housing has an additional recess formed in the front side of the housing and the additional identifier comprises an additional insert block secured in the additional recess.

8. Data storage element according to any one of claims 1 to 7, characterized in that the first identifier is formed on a rear side of the housing.

9. Data storage element according to any one of claims 1 to 8, characterized in that at least a portion of the rear side of the housing has a label for identifying the data storage element, and the first identifier is positioned on a portion of the rear side different from the label.

10. Data storage element according to any one of claims 1 to 9, characterized by a second identifier on the same side of the housing as the first identifier, said second identifier having identifying coding thereon indicating the nature of the media, the coding on the first and second identifiers together completely indicating the nature of the media.

11. Data storage element according to any one of claims 1 to 10, characterized in that the data storage element is of a type selected from the group consisting of tape cartridges, floppy disks, floptical disks, optical disks and removable hard disks.

12. An automated handling apparatus for use with the data storage element according to any one of claims 1 to 11, comprising:
- a mechanical arm for grasping the data storage element and
- sensors mounted to the arm and positioned to detect the identifying coding on the data storage element of claim 1 when the arm is grasping the data storage element, the sensors generating a signal representative of the identifying coding thus detected.

13. Method of assembling a data storage element having a housing having front and other sides and enclosing a data storage media, the method comprising:
- forming a housing having:
- a media access opening formed in or near the front side of the housing to provide access to the inside of the housing, and
- a recess with Predefined dimensions formed in one of the other sides of the housing,
- selecting and preparing data storage media of a certain nature for use in the data storage element,
- forming an insert block having exterior dimensions substantially matching those of the recess and having openings formed therein which code for the nature of the data storage media,
- assembling the data storage media into the housing, and
- securing the prepared insert block in the recess.

14. The method according to claim 13, characterized in that the insert block is formed of a material having a color which also codes for the nature of the data storage media.

15. Method according to claim 12 or 13, characterized in that the recess and insert block are positioned on the rear side of the housing.
